Europäisches Patentamt

European Patent Office

Office européen des brevets

(19)

(11) Publication number: **0 585 895 B1**

(12) EUROPEAN PATENT SPECIFICATION

(45) Date of publication of patent specification: **08.11.95**
(21) Application number: **93113957.0**
(22) Date of filing: **01.09.93**

(51) Int. Cl.⁶: **A01N 43/08**, //(A01N43/08, 33:22)

(54) **Herbicidal compositions.**

(30) Priority: **03.09.92 GB 9218664**

(43) Date of publication of application:
**09.03.94 Bulletin 94/10**

(45) Publication of the grant of the patent:
**08.11.95 Bulletin 95/45**

(84) Designated Contracting States:
**AT BE CH DE DK ES FR GB GR IE IT LI LU NL
PT SE**

(56) References cited:
**FR-A- 2 547 581
FR-A- 2 656 985
FR-A- 2 671 457**

**DATABASE CHEMABS CHEMICAL AB-
STRACTS SERVICE, COLUMBUS, OHIO, US
AN: CA117(3): 21863h R.E.BLACKSHAW ET
AL. 'Weed control in safflower (Carthamus
tinctorius) with flurtamone'**

(73) Proprietor: **RHONE-POULENC AGROCHIMIE
14-20, rue Pierre Baizet
F-69009 Lyon (FR)**

(72) Inventor: **Rognon, Jacques
31 Rue de Lattre de Tassigny
F-69009 Lyon (FR)**

(74) Representative: **Brachotte, Charles et al
RHONE-POULENC AGROCHIMIE
Département Propriété Industrielle
B.P. 9163
F-69263 Lyon Cedex 09 (FR)**

DATABASE CHEMABS CHEMICAL AB-
STRACTS SERVICE, COLUMBUS, OHIO, US
AN: CA114(13): 116854h G.H.FRIESEN ET AL.
'Wild mustard control in sunflower with flur-
tamone'

DATABASE CHEMABS CHEMICAL AB-
STRACTS SERVICE, COLUMBUS, OHIO, US
AN: CA117(3): 21863h R.E.BLACKSHAW ET
AL. 'Weed control in safflower (Carthamus
tinctorius) with flurtamone' & WEED SCI. vol.
40, no 1, 1992, pages 110-114

DATABASE CHEMABS CHEMICAL AB-
STRACTS SERVICE, COLUMBUS, OHIO, US
AN: CA114(13): 116854h G.H.FRIESEN ET AL.
'Wild mustard control in sunflower with flur-
tamone' & CAN.J. PLANT SCI. vol. 70, no. 4,
1990, pages 1195-1197

**Description**

The present invention relates to new herbicidal compositions comprising a mixture of 5-(methylamino)-2-phenyl-4-[3-(trifluoromethyl)-phenyl]-3(2H)-furanone i.e. flurtamone and 2-chloro-6-nitro-phenoxyaniline, i.e. aclonifen. It also relates to the use of the mixtures per se and to a method of controlling weeds.

Flurtamone is a well known selective herbicide disclosed in U.S. Patent No. 4,568,376 and the Pesticide Manual 9th edition (British Crop Protection Council) recommended for the control of a large number of grass and broad-leaved weed species in cotton, peanuts, sorghum and sunflowers, applied pre- or post-emergence. Aclonifen is also a well known herbicide described in U.S. Patent No. 4,394,159 and the Pesticide Manual 9th edition used pre-emergence in the selective control of weeds.

Chemical Abstracts, volume 114, abstract no. 116854h (& Can. J. Plant Sci. (1990), vol. 70, no. 4, pages 1195 to 1197) describes herbicidal compositions comprising flurtamone in combination with trifluralin or ethalfluralin for controlling a broad range of weeds.

FR-A-2656985 discloses herbicidal compositions comprising aclonifen and at least one other herbicide selected from neburon, linuron, alachlor, cyanazine and pendimethalin which are effective in controlling various types of weed, including Galium aparine and Veronica persica.

However certain weeds that constitute a serious problem are insufficiently controlled by flurtamone. Thus Avena fatua, Alopecurus myosuroides, Galium aparine, Lolium multiflorum, Veronica persica, Veronica hederifolia and Viola arvensis need to be controlled more effectively.

As a result of research and experimentation it has been found that the use of aclonifen in combination with flurtamone, extends the spectrum of herbicidal activity to include the control of Avena fatua, Alopecurus myosuroides, Galium aparine, Lolium multiflorum, Veronica persica, Veronica hederifolia and Viola arvensis. Therefore the said combination represents an important technological advance. The term "combination" as used in this specification refers to the "combination" of flurtamone and aclonifen.

Surprisingly, it has been found that the combined herbicidal activity of flurtamone with aclonifen, for the control of certain weed species is greater than expected, without an unacceptable increase in crop phytotoxicity, applied pre- or post- emergence (e.g. as a pre-or post- emergence aqueous spray), i.e. the herbicidal activity of flurtamone with aclonifen showed an unexpected degree of synergism, as defined by Limpel, L.E., P.H. Schuldt and D. Lamont, 1962, 1. Proc. NEWCC 16, 48-53, using the formula:-

$$E = X + Y - \frac{X.Y}{100}$$

where

E = the expected percent inhibition of growth by a mixture of two herbicides A and B at defined doses.

X = the percent inhibition of growth by herbicide A at a defined dose.

Y = the percent inhibition of growth by herbicide B at a defined dose.

When the observed percentage of inhibition by the mixture is greater than the expected value E using the formula above the combination is synergistic.

The remarkable synergism on Avena fatua, Alopecurus myosuroides, Galium aparine, Lolium multiflorum, Veronica persica, Veronica hederifolia and Viola arvensis gives improved reliability in controlling these serious competitive weeds of many crop species, leading to a considerable reduction in the amount of active ingredient required for weed control.

A high level of control of these weeds is desirable to prevent:-

1) yield loss, through competition and/or difficulties with harvest,

2) crop contamination leading to storage and cleaning difficulties, and

3) unacceptable weed seed return to the soil.

Accordingly the present invention provides a new herbicidal composition comprising a herbicidally effective amount (e.g. a synergistic herbicidally effective amount) of

(a) flurtamone; and

(b) aclonifen

in association with a herbicidally acceptable diluent or carrier and/or surface active agent.

These compositions may be used as herbicides in a broad range of dose rates (a): (b) depending on the crop to be treated, the weeds present and their population, the compositions used, the timing of the treatment, the climatic and edaphic conditions, and the dose ratio of (a):(b) required to obtain a satisfactory level of weed control but not necessarily totally weed-free. When applied to a crop-growing area, the rate of application should be sufficient to control the growth of weeds without causing substantial permanent damage to the crop.

Unless otherwise stated, the percentages and ratios appearing in this specification are by weight.

Generally a composition in which the ratio of (a):(b) is from 0.036:1 to 13.3:1, preferably 0.05:1 to 13.3:1, is used.

Preferably the ratio of (a):(b) is from 0.25:1 to 3.3:1 more preferably from 0.8:1 to 1.3:1. Where the combination is applied to a cereal crop locus a ratio of (a):(b) of from 0.25:1 to 2.16:1 is also preferred. Where the combination is applied to a locus wherein the crop is peas or sunflowers preferably the ratio of (a):(b) is about 0.26:1.

Generally the active ingredients are homogeneously dispersed in other components cited hereinafter, such as a diluent or carrier and/or surface-active agents.

The term "herbicidal compositions" is used in a broad sense, to include not only compositions which are ready for use as herbicides but also concentrates which must be diluted before use. Preferably the compositions contain from 0.05 to 90% by weight of flurtamone and aclonifen.

The herbicidal composition may contain solid and liquid carriers and surface-active agents (e.g. wetters, dispersants or emulsifiers alone or in combination). Surface-active agents that may be present in the herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, absorbent carbon black and clays such as kaolin and bentonite. Examples of suitable liquid diluents include water, acetophenone, cyclohexanone, isophorone, toluene, xylene, and mineral, animal, and vegetable oils (these diluents may be used alone or in combination).

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are wettable powders or water dispersible granules. Most preferred herbicidal compositions are aqueous suspension concentrates.

The wettable powders (or powders for spraying) usually contain from 20 to 95% of combination, and they usually contain, in addition to the solid vehicle, from 0 to 5% of a wetting agent, from 3 to 10% of a dispersant agent and if necessary, from 0 to 10% of one or more stabilisers and/or other additives such as penetrating agents, adhesives or anti-caking agents and colourings.

The aqueous suspension concentrates, which are applicable by spraying, are prepared in such a way as to obtain a stable fluid product (by fine grinding) which does not settle out and they usually contain from 10 to 75% of combination, from 0.5 to 15% of surface active agents, from 0.1 to 10% of thixotropic agents, from 0 to 10% of suitable additives such as antifoams, corrosion inhibitors, stabilisers, and water or an organic liquid in which the active substance is sparingly soluble or insoluble. Some organic solid substances or inorganic salts can be dissolved in order to assist in preventing sedimentation or as antifreeze for the water.

Herbicidal compositions according to the present invention may also comprise flurtamone and aclonifen in association with, and preferably homogeneously dispersed in, one or more other pesticidally active compounds and, if desired one or more compatible pesticidally acceptable diluents and carriers.

Preferred herbicidal compositions according to the present invention which comprise flurtamone and aclonifen in association with other herbicides are those wherein the other herbicide is for example isoproturon, diflufenican, chlortoluron or isoxaben (which are particularly useful where the composition is to be applied to a cereal crop locus).

By way of example, there follows the composition of an aqueous suspension concentrate.

**Example A1:**

| | |
|---|---|
| Combination (94 g/l flurtamone and 350 g/l aclonifen) | 444 g/l |
| Propylene glycol | 50 g/l |
| Organopolysiloxane oil | 2 g/l |
| Ethoxylated tristyrylphenol phosphate | 10 g/l |
| Sodium phenylsulphonate | 10 g/l |
| Ethopropoxylated block copolymer alkylphenol | 10 g/l |
| Polysaccharide | 2 g/l |
| 1,2-Benzisothiazolin-3-one | 1 g/l |
| Water | 623 g/l. |

The compositions of the invention may be made up as an article of manufacture comprising flurtamone and aclonifen and optionally other pesticidally active compounds as hereinbefore described, and as is preferred, a herbicidal composition as hereinbefore described and preferably a herbicidal concentrate which must be diluted before use, comprising the flurtamone and aclonifen within a container for the aforesaid flurtamone and aclonifen or a said herbicidal composition and instructions physically associated with the aforesaid container, setting out the manner in which the aforesaid flurtamone and aclonifen or herbicidal composition contained therein, is to be used to control the growth of weeds. The containers will normally be of the types conventionally used for the storage of chemical substances and concentrated herbicidal compositions, which are solids or liquids at normal ambient temperatures, for example cans and drums of plastics materials or metal (which may be internally-lacquered), bottles of glass and plastics materials; and when the contents of the container is a solid, for example a granular herbicidal composition, boxes, for example of cardboard, plastics material, metal or sacks. The containers will normally be of sufficient capacity, to contain amounts of the active ingredients or herbicidal compositions sufficient to treat at least one hectare of ground, to control the growth of weeds therein but will not exceed a size which is convenient for conventional methods of handling. Instructions will be physically associated with the container, for example by being printed directly thereon or on a label or tag affixed thereto. The directions will normally indicate that the contents of the container, after dilution if necessary, are to be applied to control the growth of weeds at rates of application from 50g to 2000g of flurtamone and from 150 to 1400g (e.g. 150 to 1000g) of aclonifen per hectare in the manner and for the purpose hereinbefore described.

According to a further feature of the present invention, there is provided a product comprising a synergistic herbicidally effective amount of(a) flurtamone and (b) aclonifen as a combined preparation for simultaneous, separate or sequential use in controlling the growth of weeds at a locus.

According to a further feature of the present invention there is provided a method of controlling the growth of weeds at a locus which comprises applying to the locus a synergistic herbicidally effective amount of (a) flurtamone, and (b) aclonifen by pre- or post- emergence application. For mixtures of flurtamone and aclonifen, they are generally applied at application rates of 150 to 400 g/ha of (a) and 150 to 1400 g/ha of (b). The method of the invention may be used to control a very wide spectrum of annual broad-leafed weeds and grass weeds in crops such as sunflowers, peas or cereals, e.g. wheat, barley and rye, without significant permanent damage to the crop. The combined use described above offers both foliar and residual activity and consequently can be employed over a long period of crop development, i.e. from pre-weed pre-crop emergence to post-weed post-crop emergence. In the method according to this feature of the present invention, application of the herbicides to control weeds in sunflowers, peas or autumn-sown cereals, e.g. winter wheat or winter barley, is preferred. Where the crop is an autumn sown cereal preferably the application rate of (b) is from 150 to 250 g/ha. Where the crop is sunflowers or peas the application rate of (a) is about 360 g/ha and the application rate of (b) is preferably about 1400 g/ha.

Where the mixture is applied to control weeds of cereals the mixture is preferably applied early post-emergence. Where the mixture is applied to control weeds of peas or sunflowers, pre-emergence application is preferred.

In the method described above, the combined use of (a) flurtamone and (b) aclonifen in proportions of 0.25:1 to 0.6:1 wt/wt of (a) : (b) is particularly preferred.

Flurtamone and aclonifen in combination may be used to control the growth of weeds, especially those indicated below, by pre- or post-emergence application in established orchards and other tree-growing areas, for example forests, woods and parks, and plantations e.g. sugar cane, oil palm and rubber plantations. For this purpose they may be applied in a directional or non-directional fashion (e.g. by directional or non-directional spraying) to the weeds or to the soil in which they are expected to appear, before or after planting of the trees or plantations at application rates between 250 g and 2000g of flurtamone and from 250g to 1400 (e.g. 250g to 1000g) of aclonifen per hectare.

Flurtamone and aclonifen in combination may also be used to control the growth of weeds, especially those indicated below, at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. Pre- or post-emergence application, and preferably pre-emergence application, in a directional or non-directional fashion (e.g. by directional or non-directional spraying) at application rates from 250 g to 2000g of flurtamone and from 250 to 1400g (e.g. 250 to 1000g) of aclonifen per hectare is particularly suitable for this purpose.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. By the term ' early post-emergence application' is meant application to the aerial or exposed portions of the weeds which have emerged above the surface of the soil and are between the cotyledonous stage and the second to third leaf stage (or third and fourth whorl stage) of growth. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by this method include

broad-leafed weeds, for example, Abutilon theophrasti, Amaranthus retroflexus, Bidens pilosa, Chenopodium album, Galium aparine, Ipomoea spp. e.g Ipomoea purpurea, Lamium purpureum, Matricaria inodora, Sesbania exalta, Sinapis arvensis, Solanum nigrum, Stellaria media, Veronica hederifolia, Veronica persica, Viola arvensis, and Xanthium strumarium,

grass weeds, for example Alopecurus myosuroides, Avena fatua, Digitaria sanguinalis, Echinochloa crus-galli, Eleusine indica, Lolium multiflorum, Setaria viridis and Sorghum halepense,

and sedges, for example Cyperus esculentus, Cyperus iria and Cyperus rotundus, and Eleocharis acicularis.

The pattern of persistence of flurtamone and aclorifen allow the method of the present invention to be practised by the time-separated application of separate formulations.

In accordance with the usual practice, a tank mix may be prepared prior to use by combining separate formulations of the individual herbicidal components.

The following Experiments illustrate the present invention.

## GENERAL EXPERIMENTAL PROCEDURE

### EXPERIMENT B

The experiments were carried out at research farms in England, Spain and France. Flurtamone (formulated as water-dispersible granules) and aclonifen (formulated as an aqueous suspension concentrate) were weighed out and dissolved in water to give a 650ml solution containing the appropriate concentrations and ratios of active ingredients. The solution was mixed for one hour and applied at a spray volume of 231 litres/hectare to a 2 metre by 5 metre test plot comprising the weed species. The following applications were made:

a) pre-emergence, in which case the weeds had been sown 2 days earlier;
b) early post-emergence, in which case the weeds had been sown 45 days earlier; or
c) late post-emergence, in which case the weeds had been sown 152 days earlier.

In each case, 3 replicates were performed. A control plot was sprayed with a solution not containing test compound. Visual assessment of phytotoxicity was made after 197 days from sowing each weed species based on a comparison with the control plot.

6

The tables below show the observed percentage control of the weed species by each combination, with the figure in brackets representing the predicted value using the Limpel formula.

**EXAMPLE B1**

Trials showing the nature of the synergistic biological effect of the combination of flurtamone with aclonifen on Lolium multiflorum

The experiment is carried out having sown Lolium multiflorum seeds.

### Pre-emergence:

**England**

| | Flurtamone | | |
|---|---|---|---|
| g/ha | 0 | 250 | 325 |
| 0 | - | 98 | 90 |
| Aclonifen 250 | 10 | 91(99) | 100(91) |
| 500 | 7 | 100(98) | 100(91) |

**Spain**

| | Flurtamone | | |
|---|---|---|---|
| g/ha | 0 | 250 | 325 |
| 0 | - | 50 | 65 |
| Aclonifen 250 | 35 | 82(67) | 100(77) |
| 500 | 35 | 87(67) | 100(77) |

**France**

| | Flurtamone | | |
|---|---|---|---|
| g/ha | 0 | 250 | 325 |
| 0 | - | 15 | 55 |
| Aclonifen 250 | 0 | 20(15) | 55(55) |
| 500 | 10 | 60(15) | 55(60) |

### Early post-emergence:

**England**

| | Flurtamone | | |
|---|---|---|---|
| g/ha | 0 | 150 | 250 |
| 0 | - | 73 | 97 |
| Aclonifen 150 | 3 | 92(74) | 100(97) |
| 250 | 13 | 97(77) | 95(97) |

### Late post-emergence

**England**

| | Flurtamone | | |
|---|---|---|---|
| g/ha | 0 | 250 | 325 |
| 0 | - | 50 | 62 |
| Aclonifen 150 | - | 67(-) | 83(-) |
| 250 | 0 | 75(50) | 87(62) |

**EXAMPLE B2**

Trial demonstrating the nature of the synergistic biological effect of the combination of flurtamone with aclonifen on Alopecurus myosuroides

## Pre-emergence

England

| Flurtamone | | | |
|---|---|---|---|
| g/ha | 0 | 250 | 325 |
| 0 | - | 95 | 96 |
| Aclonifen 250 | 3 | 96(95) | 98(96) |
| 500 | 10 | 98(96) | 100(96) |

## Early post-emergence

England

| Flurtamone | | | |
|---|---|---|---|
| g/ha | 0 | 150 | 250 |
| 0 | - | 72 | 73 |
| Aclonifen 150 | 7 | 90(74) | 92(75) |
| 250 | 0 | 85(72) | 98(73) |

## Late post-emergence

England

| Flurtamone | | | |
|---|---|---|---|
| g/ha | 0 | 250 | 325 |
| 0 | - | 47 | 50 |
| Aclonifen 150 | - | 70(-) | 75(50) |
| 250 | 0 | 70(47) | 80(50) |

**EXAMPLE B3**

Trial demonstrating the nature of the synergistic biological effect of the combination of flurtamone with aclonifen on Galium aparine

The experiment is carried out having sown Galium aparine seeds.

## Pre-emergence

England

| | | Flurtamone | | |
|---|---|---|---|---|
| | g/ha | 0 | 250 | 325 |
| | 0 | - | 83 | 82 |
| Aclonifen | 250 | 10 | 82(85) | 92(84) |
| | 500 | 17 | 90(86) | 95(85) |

France

| | | Flurtamone | | |
|---|---|---|---|---|
| | g/ha | 0 | 250 | 325 |
| | 0 | - | 35 | 45 |
| Aclonifen | 250 | 0 | 60(35) | 60(45) |
| | 500 | 0 | 60(45) | 85(45) |

## Early post-emergence

England

| | | Flurtamone | | |
|---|---|---|---|---|
| | g/ha | 0 | 150 | 250 |
| | 0 | - | 63 | 93 |
| Aclonifen | 150 | 15 | 93(69) | 100(94) |
| | 250 | 33 | 100(75) | 100(95) |

## Late post-emergence

England

| | | Flurtamone | | |
|---|---|---|---|---|
| | g/ha | 0 | 250 | 325 |
| | 0 | - | 47 | 40 |
| Aclonifen | 150 | - | 50(-) | 68(-) |
| | 250 | 8 | 65(51) | 80(45) |

**EXAMPLE B4**

Trial demonstrating the nature of the synergistic biological effect of the combination of flurtamone with aclonifen on Avena fatua

### Pre-emergence

England — Flurtamone

| g/ha | 0 | 250 | 325 |
|---|---|---|---|
| 0 | - | 47 | 53 |
| Aclonifen 250 | 0 | 53(47) | 72(53) |
| 500 | 0 | 75(47) | 85(53) |

France — Flurtamone

| g/ha | 0 | 250 | 325 |
|---|---|---|---|
| 0 | - | 0 | 60 |
| Aclonifen 250 | 0 | 30(0) | 40(60) |
| 500 | 0 | 65(0) | 70(60) |

### Early post-emergence

England — Flurtamone

| g/ha | 0 | 150 | 250 |
|---|---|---|---|
| 0 | - | 13 | 67 |
| Aclonifen 150 | 7 | 50(19) | 67(69) |
| 250 | 7 | 53(19) | 58(69) |

### Late post-emergence

England — Flurtamone

| g/ha | 0 | 250 | 325 |
|---|---|---|---|
| 0 | - | 10 | 7 |
| Aclonifen 150 | - | 23(-) | 27(-) |
| 250 | 0 | 17(10) | 30(7) |

EP 0 585 895 B1

**EXAMPLE B4**

Trial demonstrating the nature of the synergistic biological effect of the combination of flurtamone with aclonifen on Viola arvensis

The experiment is carried out having sown Viola arvensis seeds.

## Pre-emergence

England          Flurtamone

| Aclonifen | g/ha | 0 | 250 | 325 |
|---|---|---|---|---|
| | 0 | - | 93 | 95 |
| | 250 | 20 | 93(94) | 92(96) |
| | 500 | 48 | 97(96) | 97(97) |

## Early post-emergence

England          Flurtamone

| Aclonifen | g/ha | 0 | 150 | 250 |
|---|---|---|---|---|
| | 0 | - | 95 | 100 |
| | 150 | 60 | 100(98) | 100(100) |
| | 250 | 93 | 100100) | 100(100) |

## Late post-emergence

England          Flurtamone

| Aclonifen | g/ha | 0 | 250 | 325 |
|---|---|---|---|---|
| | 0 | - | 60 | 100 |
| | 150 | - | 100(-) | 100(-) |
| | 250 | 17 | 100(67) | 100(100) |

11

**EXAMPLE B5**

Trial demonstrating the nature of the synergistic biological effect of the combination of flurtamone with aclonifen on Veronica hederifolia

## Pre-emergence:

### England

| | Flurtamone | | |
|---|---|---|---|
| g/ha | 0 | 250 | 325 |
| 0 | - | 20 | 40 |
| Aclonifen 250 | 20 | 20(36) | 67(52) |
| 500 | 13 | 40(30) | 50(48) |

### France

| | Flurtamone | | |
|---|---|---|---|
| g/ha | 0 | 250 | 325 |
| 0 | - | 35 | 35 |
| Aclonifen 250 | 0 | 45(35) | 50(35) |
| 500 | 0 | 45(35) | 75(35) |

## Early post-emergence:

### England

| | Flurtamone | | |
|---|---|---|---|
| g/ha | 0 | 150 | 250 |
| 0 | - | 37 | 43 |
| Aclonifen 150 | 27 | 88(54) | 88(58) |
| 250 | 40 | 88(62) | 95(66) |

## Late post-emergence

### England

| | Flurtamone | | |
|---|---|---|---|
| g/ha | 0 | 250 | 325 |
| 0 | - | 13 | 17 |
| Aclonifen 150 | - | 30(-) | 48(-) |
| 250 | 3 | 43(16) | 60(19) |

12

**EXAMPLE B6**

Trial demonstrating the nature of the synergistic biological effect of the combination of flurtamone with aclonifen on Veronica persica

The experiment is carried out having sown Veronica persica seeds.

## Pre-emergence:

England      Flurtamone

|  | g/ha | 0 | 250 | 325 |
|---|---|---|---|---|
|  | 0 | - | 100 | 97 |
| Aclonifen | 250 | 82 | 100(100) | 100(99) |
|  | 500 | 95 | 100(100) | 100(100) |

## Early post-emergence:

England      Flurtamone

|  | g/ha | 0 | 150 | 250 |
|---|---|---|---|---|
|  | 0 | - | 92 | 97 |
| Aclonifen | 150 | 100 | 100(100) | 100(100) |
|  | 250 | 97 | 100(100) | 100(100) |

## Late post-emergence

England      Flurtamone

|  | g/ha | 0 | 250 | 325 |
|---|---|---|---|---|
|  | 0 | - | 33 | 43 |
| Aclonifen | 150 | - | 92(-) | 88(-) |
|  | 250 | 17 | 90(44) | 98(53) |

With reference to the formula given at the beginning of the description the results above clearly demonstrate the excellent and unexpected degree of synergism obtained with the combination of the invention.

It will be understood that the results presented above were all obtained in field trials. Such trials generally represent a more rigorous test of herbicidal properties than tests in the greenhouse, where test plants are protected from the variable conditions to which they are inevitably subject in the open field. Because of the variability of conditions in field tests, it is generally more difficult to secure a clear showing of synergism than in greenhouse testing. Nevertheless, herbicidal mixtures which demonstrate synergism in greenhouse testing must, if they are to be of commercial utility, be capable of demonstrating synergism under field conditions. i.e.under the conditions which will prevail when they are used by a farmer. The results obtained in the foregoing Examples therefore represent a particularly clear demonstration of synergism under practical conditions.

## Claims

1. A herbicidal composition comprising a synergistic herbicidally effective amount of flurtamone, which is 5-(methylamino)-2-phenyl-4-[3-(trifluoromethyl)phenyl]-3(2H)-furanone, and aclonifen, which is 2-chloro-6-nitrophenoxyaniline, in association with a herbicidally acceptable diluent or carrier and/or surfactant.

**2.** A herbicidal composition comprising a herbicidally effective amount of flurtamone, which is 5-(methylamino)-2-phenyl-4-[3-(trifluoromethyl)phenyl]-3(2H)-furanone, and aclonifen, which is 2-chloro-6-nitrophenoxyaniline, in association with a herbicidally acceptable diluent or carrier and/or sufactant, wherein the ratio of flurtamone : aclonifen is from 0.036:1 to 13.3:1 wt/wt.

**3.** The herbicidal composition according to claim 1 or 2 in which the ratio of flurtamone : aclonifen is from 0.25:1 to 3.3:1 wt/wt.

**4.** The herbicidal composition according to claim 1, 2 or 3 in which the ratio of flurtamone : aclonifen is from 0.8:1 to 1.3:1 wt/wt.

**5.** The herbicidal composition according to claim 1, 2 or 3 in which the ratio of flurtamone : aclonifen is from 0.25:1 to 2.16:1 wt/wt.

**6.** The herbicidal composition according to any one of claims 1 to 5 in the form of a wettable powder or a water dispersible granule.

**7.** The herbicidal composition according to any one of claims 1 to 5 in the form of an aqueous suspension concentrate.

**8.** A product comprising a synergistic herbicidally effective amount of flurtamone, which is 5-(methylamino)-2-phenyl-4-[3-(trifluoromethyl)phenyl]-3(2H)-furanone, and aclonifen, which is 2-chloro-6-nitrophenoxyaniline, as a combined preparation for simultaneous, separate or sequential use in controlling the growth of weeds at a locus.

**9.** A method of controlling the growth of weeds at a locus which comprises applying to the locus a synergistic herbicidally effective amount of flurtamone, which is 5-(methylamino)-2-phenyl-4-[3-(trifluoromethyl)phenyl]-3(2H)-furanone, and aclonifen, which is 2-chloro-6-nitrophenoxyaniline.

**10.** The method according to claim 9 in which the application rate of flurtamone and aclonifen is about 150 to 400 g/ha of flurtamone and about 150 to 1400 g/ha of aclonifen.

**11.** The method according to claim 9 or 10 for the control of weeds in an autumn sown cereal crop.

**12.** The method according to claim 11 in which the application rate of flurtamone and aclonifen is about 150 to 400 g/ha of flurtamone and about 150 to 250 g/ha of aclonifen.

**13.** The method according to any one of claims 9 to 12 by early post-emergence application.

**14.** The method according to claim 9 or 10 for the control of weeds in a crop selected from sunflowers and peas.

**15.** The method according to claim 14 in which the application rate of flurtamone and aclonifen is about 360 g/ha of flurtamone and about 1400 g/ha of aclonifen.

**16.** The method according to any one of claims 9, 10, 14 and 15 by pre-emergence application.

**Patentansprüche**

**1.** Herbizide Zusammensetzung, die eine synergistisch herbizid wirksame Menge Flurtamone, d.h. 5-(Methylamino)-2-phenyl-4-[3-(trifluormethyl)-phenyl]-3(2H)-furanon, sowie Aclonifen, d.h. 2-Chlor-6-nitrophenoxyanilin, zusammen mit einem für Herbizide akzeptablen Verdünnungsmittel oder Träger und/oder Tensid enthält.

**2.** Herbizide Zusammensetzung, die eine herbizid wirksame Menge Flurtamone, d.h. 5-(Methylamino)-2-phenyl-4-[3-(trifluormethyl)phenyl]-3(2H)-furanon, sowie Aclonifen, d.h. 2-Chlor-6-nitrophenoxyanilin, zusammen mit einem für Herbizide akzeptablen Verdünnungsmittel oder Träger und/oder einem Tensid enthält, wobei das Gewichtsverhältnis Flurtamone:Aclonifen 0,036:1 bis 13,3:1 beträgt.

3. Herbizide Zusammensetzung nach Anspruch 1 oder 2, wobei das Gewichtsverhältnis Flurtamone:Aclonifen 0,25:1 bis 3,3:1 beträgt.

4. Herbizide Zusammensetzung nach Anspruch 1, 2 oder 3, wobei das Gewichtsverhältnis Flurtamone:Aclonifen 0,8:1 bis 1,3:1 beträgt.

5. Herbizide Zusammensetzung nach Anspruch 1, 2 oder 3, wobei das Gewichtsverhältnis Flurtamone:Aclonifen 0,25:1 bis 2,16:1 beträgt.

6. Herbizide Zusammensetzung nach einem der Ansprüche 1 bis 5 in Form eines benetzbaren Pulvers oder eines in Wasser dispergierbaren Granulats.

7. Herbizide Zusammensetzung nach einem der Ansprüche 1 bis 5 in Form eines wäßrigen Suspensionskonzentrats.

8. Produkt, das eine synergistisch herbizid wirksame Menge Flurtamone, d.h. 5-(Methylamino)-2-phenyl-4-[3-(trifluormethyl)-phenyl]-3(2H)-furanon, sowie Aclonifen, d.h. 2-Chlor-6-nitrophenoxyanilin, als Kombinationspräparat zur gleichzeitigen, getrennten oder hintereinander vorgenommenen Anwendung bei der lokalen Kontrolle des Wachstums von Unkräutern enthält.

9. Verfahren zur lokalen Kontrolle des Wachstums von Unkräutern, das die Anwendung einer synergistisch herbiziden wirksamen Menge Flurtamone, d.h. 5-(Methylamino-2-phenyl-4-[3-(trifluormethyl)-phenyl]-3(2H)-furanon sowie Aclonifen, d.h. 2-Chlor-6-nitrophenoxyanilin, auf die betreffende Stelle umfaßt.

10. Verfahren nach Anspruch 9, wobei die Ausbringmenge an Flurtamone etwa 150 bis 400 g/ha und die Ausbringmenge an Aclonifen etwa 150 bis 1400 g/ha betragen.

11. Verfahren nach Anspruch 9 oder 10 zur Kontrolle von Unkräutern in durch Herbstaussaat angebautem Getreide.

12. Verfahren nach Anspruch 11, wobei die Ausbringmenge an Flurtamone etwa 150 bis 400 g/ha und die Ausbringmenge an Aclonifen etwa 150 bis 250 g/ha betragen.

13. Verfahren nach einem der Ansprüche 9 bis 12 durch frühes Ausbringen im Nachauflaufverfahren.

14. Verfahren nach Anspruch 9 oder 10 zur Kontrolle von Unkräutern in Sonnenblumen- und Erbsenkulturen.

15. Verfahren nach Anspruch 14, wobei die Ausbringmenge an Flurtamone etwa 360 g/ha und die Ausbringmenge an Aclonifen etwa 1400 g/ha betragen.

16. Verfahren nach einem der Ansprüche 9, 10, 14 und 15 im Vorauflaufverfahren.

**Revendications**

1. Une composition herbicide contenant une quantité herbicide efficace synergique de flurtamone qui est la 5-(méthylamino)-2-phényl-4-[3-(trifluorométhyl)-phényl]-3(2H)-furanone et d'aclonifène qui est la 2-chloro-6-nitro-phénoxyaniline en mélange avec des charges, des diluants et/ou des tensioactifs compatibles avec des herbicides.

2. Une composition herbicide comprenant une quantité herbicide efficace synergique de flurtamone qui est la 5-(méthylamino)-2-phényl-4-[3-(trifluorométhyl)-phényl]-3(2H)-furanone et d'aclonifène qui est la 2-chloro-6-nitro-phénoxyaniline, en mélange avec des charges, des diluants et/ou des tensioactifs compatibles avec des herbicides, dans laquelle le rapport flurtamone : aclonifène est compris entre 0,036 :1 et 13,3 :1, poids/poids.

3. La composition herbicide selon la revendication 1 ou 2 dans laquelle le rapport flurtamone : aclonifène est compris entre 0,25 :1 et 3,3 : 1, poids/poids.

4. La composition herbicide selon la revendication 1, 2 ou 3 dans laquelle le rapport flurtamone : aclonifène est compris entre 0,8 : 1 et 1,3 : 1, poids/poids.

5. La composition herbicide selon la revendication 1, 2 ou 3, dans laquelle le rapport flurtamone : aclonifène est compris entre 0,25 : 1 et 2,16 : 1, poids/poids.

6. La composition herbicide selon l'une quelconque des revendications 1 à 5 sous la forme d'une poudre mouillable ou d'un granulé dispersable dans l'eau.

7. La composition herbicide selon l'une quelconque des revendications 1 à 5 sous la forme d'une suspension aqueuse concentrée.

8. Un produit comprenant une quantité herbicide efficace synergique de flurtamone qui est la 5-(méthylamino)-2-phényl-4-[3-(trifluorométhyl)-phényl]-3(2H)-furanone et d'aclonifène qui est la 2-chloro-6-nitro-phénoxyaniline, comme une préparation combinée pour une utilisation simultanée, séparée ou séquentielle en vue de contrôler la croissance des mauvaises herbes en un lieu.

9. Un procédé de contrôle de croissance des mauvaises herbes en un lieu qui consiste à appliquer au ditlieu une quantité herbicide efficace synergique de flurtamone qui est la 5-(méthylamino)-2-phényl-4-[3-(trifluorométhyl)-phényl]-3(2H)-furanone et d'aclonifène qui est la 2-chloro-6-nitro-phénoxyaniline.

10. Le procédé selon la revendication 9. dans lequel la dose de flurtamone et d'aclonifène appliquée est d'environ 150 à 400 g/ha de flurtamone et de environ 150 à 1400 g/ha d'aclonifène.

11. Le procédé selon la revendication 9 ou 10 pour le contrôle des mauvaises herbes dans les cultures de céréales d'automne.

12. Le procédé selon la revendication 11 dans lequel la dose de flurtamone et d'aclonifène appliquée est d'environ 150 à 400 g/ha de flurtamone et de environ 150 à 250 g/ha d'aclonifène.

13. Le procédé selon l'une quelconque des revendications 9 à 12 pour des applications de post-émergence précoces.

14. Le procédé selon l'une quelconque des revendications 9 ou 10 pour le contrôle des mauvaises herbes dans une culture telle que le tournesol ou le pois.

15. Le procédé selon la revendication 14 dans lequel la dose de flurtamone et d'aclonifène appliquée est d'environ 360 g/ha de flurtamone et d'environ 1400 g/ha d'aclonifène.

16. Le procédé selon l'une quelconque des revendications 9, 10, 14 ou 15 en application de pré-émergence.